# EUROPÄISCHE PATENTSCHRIFT

(11) **EP 3 972 125 B1**
(45) Veröffentlichungstag und Bekanntmachung des Hinweises auf die Patenterteilung: **04.12.2024**
(21) Anmeldenummer: 21196444.0
(22) Anmeldetag: 13.09.2021
(51) Int. Cl.: H02S 20/10, H02S 30/00, H02S 20/23

(54) **PHOTOVOLTAIK-ANLAGE ZUM ERZEUGEN VON SOLARSTROM**
PHOTOVOLTAIC SYSTEM FOR GENERATING SOLAR POWER
INSTALLATION PHOTOVOLTAÏQUE POUR PRODUIRE DE L'ÉNERGIE SOLAIRE

(30) Priorität: 15.09.2020 DE 202020105294 U
(43) Veröffentlichungstag der Anmeldung: 23.03.2022
(60) Teilanmeldung: 23150812.8
(73) Patentinhaber: Premium Mounting Technologies GmbH & Co. KG, 95346 Stadtsteinach (DE)
(72) Erfinder: GRASS, Peter, 96317 Kronach (DE)
(74) Vertreter: Jannig & Repkow Patentanwälte PartG mbB

(56) Entgegenhaltungen:
- EP-A1- 3 076 103
- WO-A1-2013/040687
- DE-U1- 202009 007 525
- US-A1- 2013 233 364

## Beschreibung

Die Erfindung betrifft eine Photovoltaik-Anlage zum Erzeugen von Solarstrom mit einer mit einer Vielzahl von Photovoltaikmodulen.

Photovoltaik-Anlagen werden bekanntermaßen auf einem Hausdach oder auf einer freien Fläche aufgestellt. Insbesondere auf Freiflächen ist eine matrixartige Anordnung der Photovoltaikmodule üblich, wobei die Photovoltaikmodulen unter einem möglichst günstigen Winkel zur Sonne, also ungefähr nach Süden ausgerichtet sind, um die Photovoltaikmodule mit möglichst viel Sonnenstrahlung zu beaufschlagen.

Vor allem in südlichen Ländern kommen Photovoltaik-Anlagen zum Einsatz, deren Photovoltaikmodule durch eine bewegliche und gesteuerte Tragkonstruktion während eines Tages möglichst gut dem Sonnenstand nachgeführt werden. Hierbei ist der technische Aufwand größer, jedoch ist die Stromausbeute wegen der ganztägigen optimalen Ausrichtung der Photovoltaikmodule maximal.

Des Weiteren ist eine Anordnung von Photovoltaikmodulen bekannt, die eine Tragkonstruktion in Form eines spitzen Daches aufweist, wobei die Photovoltaikmodule mit einer Ausrichtung einerseits nach Westen und andererseits nach Osten angeordnet sind. Dadurch werden die einzelnen Photovoltaikmodule wegen der fehlenden Südausrichtung nicht optimal genutzt, jedoch kommt es durch die Kombination von West- und Ostausrichtung zu einer höheren Stromausbeute pro Flächeneinheit des Untergrunds.

Die einzelnen Photovoltaikmodule werden bei allen genannten Photovoltaik-Anlagen von einer Tragkonstruktion getragen, die aus einem sich selbst tragenden Gestänge oder Gestell gebildet werden, so dass die einzelnen Photovoltaikmodule lediglich auf die Tragkonstruktion aufgelegt und daran fixiert werden müssen.

Dabei wird die unter den Photovoltaikmodulen befindliche Fläche durch die Tragkonstruktion und die Photovoltaikmodule so belegt und beeinträchtigt, dass sie nicht mehr oder allenfalls sehr beschränkt anderweitig genutzt werden kann.

Eine mögliche Lösung für dieses Problem besteht darin, dass die Tragkonstruktion so hoch aufgebaut ist, dass die unter den Photovoltaikmodulen liegenden Flächen begeh- und befahrbar sind und somit bewirtschaftet werden können. Der technische Aufwand ist dabei jedoch beträchtlich.

Weiterer Stand der Technik ist in den Dokumenten EP 3 076 103 A1, DE 20 2009 007525 U1 und WO 2013/040687 A1 offenbart. Auch diesem Stand der Technik ist keine zufriedenstellende Lösung des angesprochenen Problems entnehmbar. Andererseits offenbaren die Dokumente EP 3 076 103 A1 und DE 20 2009 007525 U1 Photovoltaik-Anlagen, wobei die Photovoltaikmodule jeder Photovoltaikmodul-Reihe so miteinander verbunden sind, dass der Winkel zwischen benachbarten Photovoltaikmodulen kleiner als 180° ist und die Photovoltaikmodul-Reihe somit einen bogenförmigen Querschnitt aufweist.

Daher liegt der vorliegenden Erfindung die Aufgabe zugrunde, eine Photovoltaik-Anlage zum Erzeugen von Solarstrom mit einer verbesserten Nutzbarkeit der dadurch bedeckten Fläche zu finden.

Diese Aufgabe wird erfindungsgemäß durch die in Patentanspruch 1 beanspruchte Photovoltaik-Anlage gelöst.

Die bogenförmige Ausbildung der Photovoltaikmodul-Reihen hat den positiven Effekt, dass die Photovoltaikmodule von Haus aus, also auch ohne ein sehr hohes Gestell vergleichsweise hoch über dem Boden zu liegen kommen. Die Verbindung der einzelnen Photovoltaikmodule untereinander ermöglicht es im Zusammenwirken mit der bogenförmigen Ausbildung der Photovoltaikmodul-Reihen, dass die Photovoltaikmodul-Reihen eine selbsttragende Anordnung bilden und somit kein Gestell erforderlich ist, auf welches jedes einzelne Photovoltaikmodule aufgelegt werden muss. Der Verzicht auf ein solches Gestell bewirkt, dass weniger Stützen oder dergleichen vorgesehen werden müssen, und dass die nutzbare Höhe unter den Photovoltaikmoduln größer ist. Damit vergrößert sich die begeh- und befahrbare Fläche unterhalb der Photovoltaikmodule.

Unabhängig von alledem wird durch die bogenförmige Anordnung der Photovoltaikmodule eine besonders effiziente Nutzung des Sonnenlichts zur Stromerzeugung ermöglicht.

Vorteilhafte Weiterbildungen der Erfindung sind der folgenden Beschreibung, den Figuren und den Unteransprüchen entnehmbar.

Die Erfindung wird nachfolgend anhand von Ausführungsbeispielen unter Bezugnahme auf die Figuren näher erläutert. Es zeigen
- Figur 1A: eine perspektivische Ansicht einer Photovoltaik-Anlage der im Folgenden näher beschriebenen Art,
- Figur 1B: eine vergrößerte Darstellung eines Ausschnittes der in der Figur 1A gezeigten Anlage,
- Figur 2A: eine Seitenansicht der in der Figur 1A gezeigten Anlage,
- Figur 2B: eine andere (von der in Figur 2A rechts dargestellten Seite aus gesehene) Seitenansicht der in der Figur 1A gezeigten Anlage,
- Figur 2C: eine Draufsicht der in den vorangehenden Figuren gezeigten Anlage,
- Figur 3A: eine Explosionsdarstellung einer Klemmvorrichtung zur Verbindung benachbarter Photovoltaikmodule,
- Figur 3B: die in der Figur 3A gezeigte Klemmvorrichtung im zwei Photovoltaikmodule miteinander verbindenden Zustand,
- Figur 4: eine erste Ausführungsform eines Verbindungselements für eine andersartige weitere Verbindung der Photovoltaikmodule,
- Figur 5: eine zweite Ausführungsform eines Verbindungselements für eine andersartige weitere Verbindung der Photovoltaikmodule,
- Figur 6: ein Kopplungselement zur Verbindung zweier Verbindungselemente gemäß den Figuren 4 und/oder 5,
- Figur 7: einen vergrößerten Ausschnitt aus der Figur 2A zur Erläuterung der Verbindung der Photovoltaikmodul-Verbindung unter Verwendung der in den Figuren 4 bis 6 gezeigten Verbindungsmittel,
- Figur 8: den in der Figur 7 gezeigten Ausschnitt aus der Figur 2A mit Darstellung der in der Figur 7 nicht gezeigten verdeckten Linien,
- Figur 9A: eine perspektivische Ansicht eines Kopplungsmechanismus, über welchen die äußersten Photovoltaikmodule jeder Photovoltaikmodul-Reihe auf eine mit dem Untergrund verbundene Basis aufgesetzt ist,
- Figur 9B: eine Seitenansicht des in der Figur 9A gezeigten Kopplungsmechanismus,
- Figur 9C: eine Explosionsdarstellung des in den Figuren 9A und 9B gezeigten Kopplungsmechanismus,
- Figur 10A: eine perspektivische Ansicht des in der Figur 9 gezeigten Kopplungsmechanismus ohne Schiene und Rad,
- Figur 10B: eine andere perspektivische Absicht der in der Figur 10A gezeigten Anordnung, und
- Figur 10C: eine Seitenansicht der in den Figuren 10A und 10B gezeigten Anordnung.

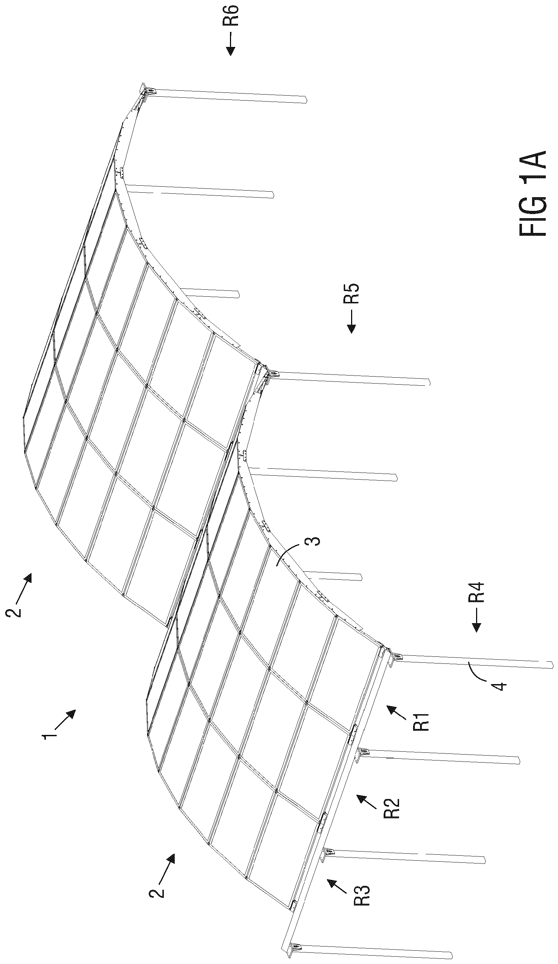

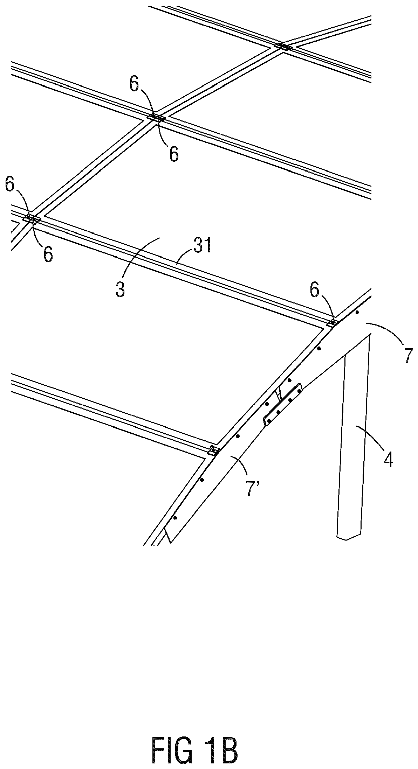

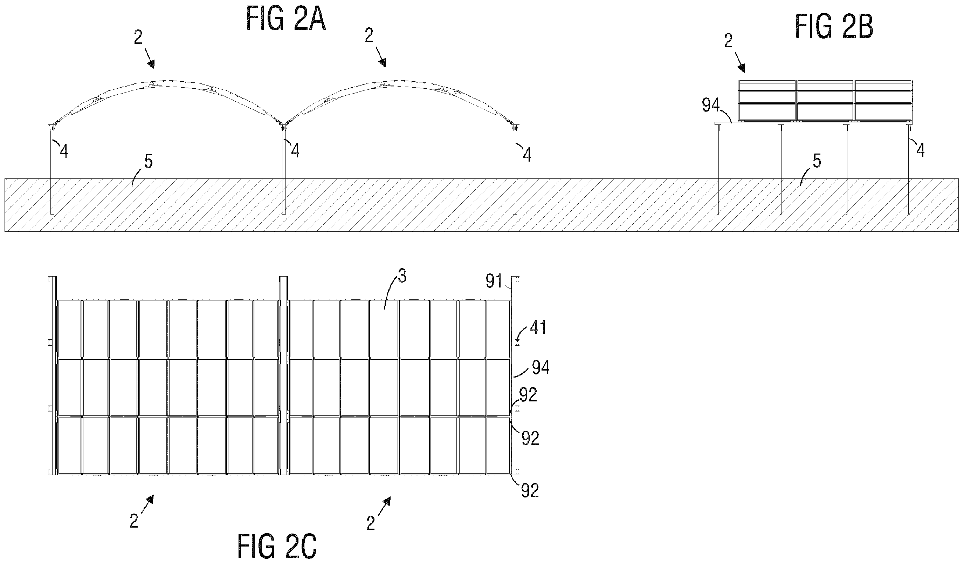

Die Figuren 1A, 1B, 2A, 2B und 2C zeigen ein Ausführungsbeispiel der im Folgenden näher beschriebenen Photovoltaik-Anlage 1 zum Erzeugen von Solarstrom. Die gezeigte Photovoltaik-Anlage 1 umfasst zwei Photovoltaikmodul-Felder 2, von welchen jedes eine Vielzahl von Photovoltaikmodulen 3 umfasst. Im betrachteten Beispiel umfasst jedes des Photovoltaikmodul-Felder 2 drei hintereinander angeordnete Photovoltaikmodul-Reihen R1, R2, R3, wobei jede Reihe acht nebeneinander in Reihe angeordnete Photovoltaikmodule 2 enthält. Jedes Photovoltaikmodul-Feld 2 umfasst somit also 8 x 3 matrixartig angeordnete Photovoltaikmodule 3. Wie später noch genauer beschrieben wird, sind die Photovoltaikmodule 3 eines jeweiligen Photovoltaikmodul-Feldes 2 direkt oder indirekt mit den jeweils benachbarten Photovoltaikmodulen 2 verbunden. Die Photovoltaikmodul-Felder 2 bilden somit jeweils eine zusammenhängende Einheit und sind unabhängig voneinander anordenbar und bewegbar. Selbstverständlich können auch mehr oder weniger als zwei Photovoltaikmodul-Felder 2 vorgesehen sein. Und auch die Anzahl der Photovoltaikmodule 3 pro Photovoltaikmodul-Feld 2 sowie deren Anordnung, genauer gesagt die Anzahl der Photovoltaikmodul-Reihen R1, R2, R3 pro Photovoltaikmodul-Feld 2 und die Anzahl der Photovoltaikmodule 3 pro Photovoltaikmodul-Reihe R1, R2, R3 können ebenfalls anders sein als im betrachteten Beispiel. Es besteht auch keine Einschränkung darauf, dass die Photovoltaikmodul-Felder 2 identisch ausgebildet sind.

Wie insbesondere aus den Figuren 1A und 2A ersichtlich ist, haben die Photovoltaikmodul-Reihen R1, R2, R3 jeweils einen bogenförmigen Querschnitt. Jede Photovoltaikmodul-Reihe enthält daher mindestens drei Photovoltaikmodule 3.

Die Photovoltaikmodule 3 sind allgemein bekannte plattenförmige rechteckige Gebilde, durch welche einfallendes Licht in elektrische Energie umgewandelt wird. Die vorliegend zum Einsatz kommenden Photovoltaikmodule weisen einen umlaufenden Rahmen 31 auf, sind also gerahmte Photovoltaikmodule. Der Rahmen 31 besteht im betrachteten Beispiel aus Aluminium, könnte aber auch aus einem anderen Material bestehen. Die Rahmenhöhe beträgt vorliegend 30 - 50 mm, könnte grundsätzlich aber auch größer oder kleiner sein. Der Vollständigkeit halber sei angemerkt, dass nur ein Teil der Rahmenhöhe durch die vom Rahmen umgebenen Photovoltaikmodul-Komponenten ausgefüllt ist. Diese Photovoltaikmodul-Komponenten befinden sich üblicherweise im oberen Bereich des Rahmens 31. Der untere Bereich ist zumindest zum größten Teil ungenutzt, und dort können andere Anlagenkomponenten, beispielsweise Befestigungsmittel wie Schrauben, Muttern, etc. zu liegen kommen.

Die Photovoltaikmodule 3 sind im betrachteten Beispiel so ausgerichtet, dass von den Photovoltaikmodulen 3 einer jeden Photovoltaikmodul-Reihe R1, R2, R3 die Längsseiten der Photovoltaikmodule 3 einander zugewandt sind. Prinzipiell wäre es jedoch auch möglich, dass die Breitseiten einander zugewandt sind.

Die Photovoltaikmodul-Felder liegen auf einer mit dem Untergrund 5 verbundene Basis 4 auf und werden von dieser getragen. Die Basis wird im betrachteten Beispiel durch eine Vielzahl von im Untergrund 5 verankerten Pfählen 4 gebildet. Genauer gesagt handelt es sich vorliegend um Rammpfähle, wobei jedoch auch andere Pfähle oder eine ganz anders realisierte Basis zum Einsatz kommen können. Es sind mehrere nebeneinander angeordnete Pfahl-Reihen R4, R5, R6 vorgesehen, die sich rechtwinklig zu den Photovoltaikmodul-Reihen R1, R2, R3 erstrecken. Jede der Pfahl-Reihen R4, R5, R6 umfasst eine Vielzahl von hintereinander in Reihe angeordneten Pfählen 4. Dabei wird das eine Photovoltaikmodul-Feld 2 von den Pfahlreihen R4 und R5 getragen, und das andere Photovoltaikmodul-Feld 2 von den Pfahlreihen R5 und R6. Genauer gesagt sind die äußersten Photovoltaikmodule jeder Photovoltaikmodul-Reihe über einen später noch genauer beschriebenen Kopplungsmechanismus auf die Pfähle 4 der jeweiligen Pfahl-Reihen aufgesetzt.

Die Pfähle 4 werden im betrachteten Beispiel durch Stahlprofile mit C-förmigem Querschnitt gebildet, könnten prinzipiell auch beliebig anders ausgebildet sein und aus einem beliebigen anderen Material bestehen.

Wie vorstehend bereits erwähnt sind die Photovoltaikmodule 3 eines jeden Photovoltaikmodul-Feldes 2 miteinander verbunden Genauer gesagt sind sowohl die Photovoltaikmodule 3 der einzelnen Photovoltaikmodul-Reihen R1, R2, R3, als auch die Photovoltaikmodule benachbarter Photovoltaikmodul-Reihen und/oder die Photovoltaikmodul-Reihen R1, R2, R3 miteinander verbunden.

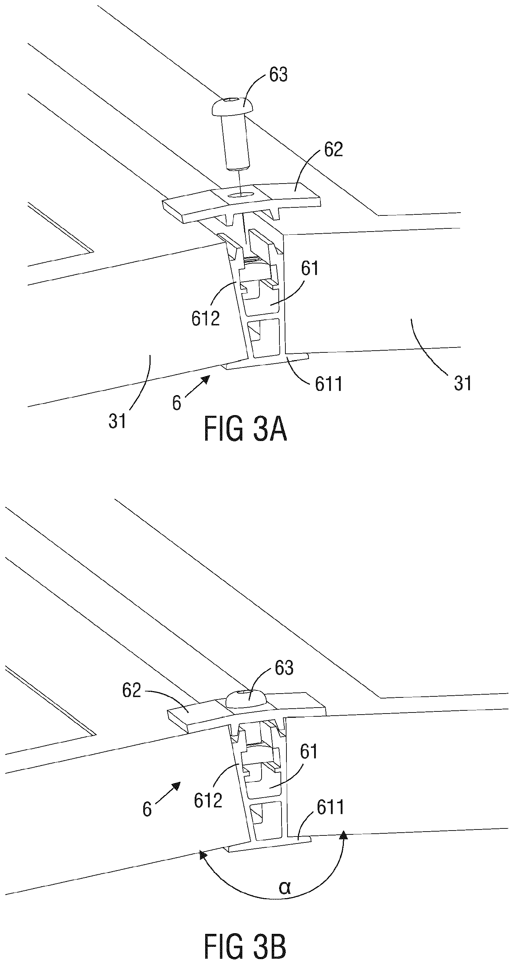

Es wird nun zunächst die Verbindung der Photovoltaikmodule 3 innerhalb einer jeweiligen Photovoltaikmodul-Reihen R1, R2, R3 beschrieben. Vorab sei hierzu angemerkt, dass die Photovoltaikmodule 3 in einer solchen Relativlage zu verbinden sind, dass die Photovoltaikmodul-Reihen wie insbesondere in den Figuren 1A und 2A gezeigt bogenförmig nach oben gewölbt sind. Das heißt, der Winkel α (siehe Figur 3B) zwischen benachbarten Photovoltaikmodulen 3 einer Photovoltaikmodul-Reihe R1, R2, R3 muss zumindest teilweise kleiner als 180° sein. Im betrachteten Beispiel sind alle Winkel zwischen den benachbarten Photovoltaikmodulen 3 einer Photovoltaikmodul-Reihe R1, R2, R3 gleich groß. Dadurch einsteht gleichmäßige und besonders stabile Wölbung. Die Größe des Winkels α hängt von der Anzahl der Photovoltaikmodule pro Photovoltaikmodul-Reihe und der Stärke der gewünschten Wölbung ab.

Von den Photovoltaikmodulen einer Photovoltaikmodul-Reihe werden im betrachteten Beispiel sowohl die einander zugewandten Seiten der Photovoltaikmodule 3 als auch die die Längsseiten der Photovoltaikmodul-Reihe bildenden Photovoltaikmodul-Seiten miteinander verbunden.

Die Verbindung der einander zugewandten Seiten der Photovoltaikmodule einer Photovoltaikmodul-Reihe wird im betrachteten Beispiel durch eine in den Figuren 3A und 3B veranschaulichte Klemmvorrichtung 6 bewirkt.

Die Klemmvorrichtung 6 umfasst einen Klemmkeil 61 und eine Klemmplatte 62, die mittels einer Schraube 63 auf den Klemmkeil 61 aufschraubbar ist. Der Klemmkeil 61 umfasst eine Bodenplatte 611 und eine von dieser nach oben abgehende, im Wesentlichen V-förmige Erhebung 612. Im bestimmungsgemäß montierten Zustand liegen die zwei miteinander zu verbindenden Photovoltaikmodule 3, genauer gesagt deren Rahmen 31 auf den gegenüberliegenden Enden der Bodenplatte 611 auf und stoßen von gegenüberliegenden Seiten seitlich an der Erhebung 612 an. Die Klemmplatte 62 wird so weit auf den Klemmkeil 61 aufgeschraubt, bis die Photovoltaikmodule zwischen Bodenplatte 611 und Klemmplatte 62 eingeklemmt und damit in Ihrer bestimmungsgemäßen Relativlage fixiert sind.

Die Bodenplatte 611, die Erhebung 612, und die Klemmplatte 62 sind so geformt, dass die zu verbindenden Photovoltaikmodule dann, wenn der Winkel α zwischen diesen den vorgegebenen Wert aufweist vollflächig mit der Bodenplatte 611, der Erhebung 612, und der Klemmplatte 62 in Kontakt stehen. Umgekehrt weist der Winkel α zwischen den Photovoltaikmodulen automatisch genau den vorgegebenen Wert auf, wenn die Photovoltaikmodule und die Klemmvorrichtung so zusammengesetzt sind, dass diese vollflächig mit der Bodenplatte 611, die Erhebung 612, und die Klemmplatte 62 in Kontakt stehen.

Die Klemmvorrichtungen 6 sind nur wenige cm lang und verbinden die Photovoltaikmodule 3 nur punktuell miteinander. Im betrachteten Beispiel werden je zwei Photovoltaikmodule jeweils durch zwei Klemmvorrichtungen 6 miteinander verbunden, wobei die Anzahl der Klemmverbindungen selbstverständlich auch größer sein kann. Die Klemmvorrichtungen kommen im betrachteten Beispiel jeweils in den Eckbereichen der Photovoltaikmodule zu liegen (siehe Figur 1B), könnten aber auch an anderen Stellen vorgesehen werden.

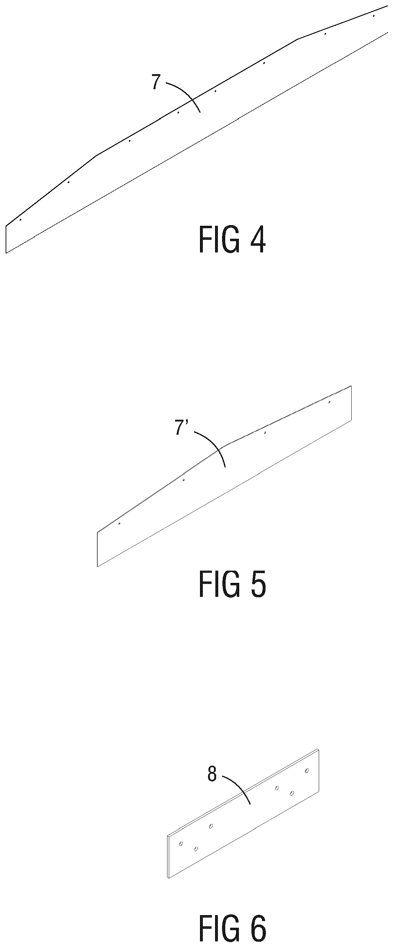

Die Verbindung der die Längsseite einer Photovoltaikmodul-Reihe bildenden Photovoltaikmodul-Seiten erfolgt unter Verwendung von in den Figuren 4 und 5 gezeigten Verbindungselementen 7, 7'. Die Verbindungselemente 7, 7' sind dazu ausgelegt, jeweils zwei oder mehr Photovoltaikmodule 3 miteinander zu verbinden.

Die Verbindungselemente 7, 7' werden im betrachteten Beispiel durch Platten gebildet, die entlang wenigstens einer Längsseite wenigstens einer Photovoltaikmodul-Reihe R1, R2, R3 verlaufend angeordnet sind und seitlich an den die betreffende Längsseite der Photovoltaikmodul-Reihe bildenden Seiten der Photovoltaikmodule 3 angebracht sind.

Vorzugsweise sind wenigstens auf einer Längsseite jeder Photovoltaikmodul-Reihe Verbindungselemente 7, 7' angebracht. Noch stabiler ist die Anordnung, wenn an beiden Längsseiten jeder Photovoltaikmodul-Reihe Verbindungselemente 7, 7' zur Verbindung der Photovoltaikmodule angebracht sind.

Es erweist sich unabhängig von der praktischen Realisierung als vorteilhaft, wenn jedes Photovoltaikmodul 3 über wenigstens ein Verbindungselement 7, 7' mit wenigstens einem anderen Photovoltaikmodul aus der gleichen Photovoltaikmodul-Reihe R1, R2, R3 verbunden ist.

Wie später noch genauer beschrieben wird, sind die Photovoltaikmodule 3 über die Verbindungselemente 7, 7' zumindest teilweise auch mit Photovoltaikmodulen aus benachbarten Photovoltaikmodul-Reihen verbunden. Vorzugsweise ist jedes Photovoltaikmodul 3 über wenigstens ein Verbindungselement 7, 7' mit wenigstens einem anderen Photovoltaikmodul aus einer benachbarten Photovoltaikmodul-Reihe verbunden.

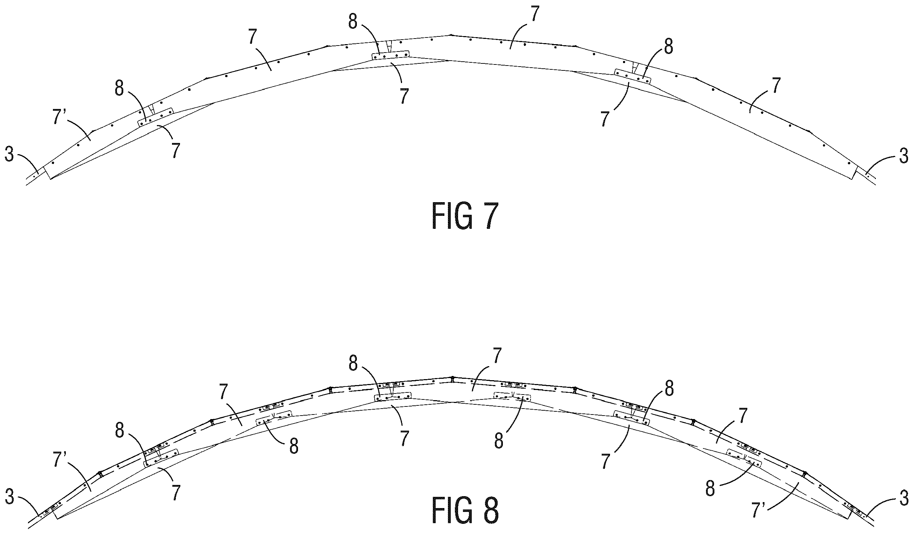

Die Anbringung der Verbindungselemente 7, 7' an einer Photovoltaikmodul-Reihe ist insbesondere in den Figuren 1B und 7 gut erkennbar. Die Anbringung erfolgt im betrachteten Beispiel durch ein Verschrauben der Verbindungselemente 7, 7' mit den Photovoltaikmodulen, genauer gesagt mit den Rahmen 31 derselben.

Die Verbindungselemente 7, 7' weisen eine schwertförmige Form auf. Genauer gesagt sind sie so ausgebildet,
- dass die im bestimmungsgemäß montierten Zustand der Verbindungselemente 7, 7' oben zu liegen kommende Seite derselben bündig mit den Oberseiten der durch sie verbundenen Photovoltaikmodule 3 abschließt, und
- dass die im bestimmungsgemäß montierten Zustand der Verbindungselemente 7, 7' unten zu liegen kommende Seite derselben die durch sie verbundenen Photovoltaikmodule nach unten überragt.

Wie beispielsweise aus der Figur 7 ersichtlich ist, in welcher eine an einer Photovoltaikmodul-Reihe angebrachte Verbindungselement-Reihe gezeigt ist, setzt sich diese Verbindungselement-Reihe aus verschiedenen Verbindungselement-Typen zusammen. Genauer gesagt ist es hier so, dass das Verbindungselement links außen ein Verbindungselement 7' gemäß Figur 5 ist, wohingegen es sich bei den restlichen Verbindungselementen um Verbindungselemente 7 gemäß Figur 4 handelt.

Die verschiedenen Verbindungselement-Typen unterscheiden sich dadurch, dass sie unterschiedlich groß sind, wobei durch den größeren Verbindungselement-Typ mehr Photovoltaikmodule miteinander verbindbar sind als mit dem kleineren Verbindungselement-Typ. Im betrachteten Beispiel ist das Verbindungselement 7 das größere Verbindungselement. Durch dieses können drei Photovoltaikmodule miteinander verbunden werden, wohingegen durch das Verbindungselement 7' nur zwei Photovoltaikmodule miteinander verbunden werden können.

Dass die Verbindungselemente einer Verbindungselement-Reihe teilweise Verbindungselemente eines ersten Typs, und teilweise Verbindungselemente eines zweiten Typs sind, gilt nach Möglichkeit für alle vorhandenen Verbindungselement-Reihen.

Die Verbindungselemente einer ersten Verbindungselement-Reihe und die Verbindungselemente einer davor oder dahinter liegenden zweiten Verbindungselement-Reihe sind vorzugsweise so unterschiedlich angeordnet, dass die Grenzen oder Zwischenräume zwischen benachbarten Verbindungselementen der ersten Verbindungselement-Reihe nicht deckungsgleich mit den Grenzen oder Zwischenräumen zwischen benachbarten Verbindungselementen der zweiten Verbindungselement-Reihe sind.

Dies ist aus Figur 8 ersichtlich, welche die Anordnung gemäß Figur 7 und zusätzlich die in der Figur 7 nicht gezeigten verdeckten Linien zeigt. Die durchgezogenen Linien zeigen eine erste Verbindungselement-Reihe, die an der Vorderseite der in der Figur ebenfalls sichtbaren Photovoltaikmodul-Reihe angebracht ist. Die gestrichelten Linien zeigen die nächste dahinter liegende zweite Verbindungselement-Reihe, welche beispielsweise an der Rückseite der in der Figur gezeigten Photovoltaikmodul-Reihe angebracht sein kann. Bei der ersten Photovoltaikmodul-Reihe wird das links außen liegende Verbindungselement durch das Verbindungselement 7' gebildet, und alle anderen Verbindungselemente der Verbindungselement-Reihe durch das Verbindungselement 7. Bei der zweiten Photovoltaikmodul-Reihe wird das rechts außen liegende Verbindungselement durch das Verbindungselement 7' gebildet, und alle anderen Verbindungselemente der Verbindungselement-Reihe durch das Verbindungselement 7. Bei einer solchen Auswahl und Anordnung der Verbindungselemente 7, 7' die Grenzen bzw. Zwischenräume zwischen benachbarten Verbindungselementen 7, 7' der ersten Verbindungselement-Reihe und die Grenzen bzw. Zwischenräume zwischen benachbarten Verbindungselementen 7, 7' der zweiten Verbindungselement-Reihe maximal weit gegeneinander versetzt. Der besseren Übersichtlichkeit halber bezeichnet die oberhalb der Figur 8 platzierte Beschriftung die Komponenten der (vorderen) ersten Verbindungselement-Reihe, und die unter der Figur 8 platzierte Beschriftung die Komponenten der (hinteren) zweiten Verbindungselement-Reihe. Dies gilt auch für die Figur 7.

Von den Verbindungselementen 7, 7', unter Verwendung welcher die Photovoltaikmodule einer Photovoltaikmodul-Reihe miteinander verbunden sind, sind benachbarte Verbindungselemente über ein mit beiden Verbindungselementen verbundenes Kopplungselement 8 verbunden. Das Kopplungselement 8 wird im betrachteten Beispiel durch eine in der Figur 6 gezeigte Platte gebildet, die mit beiden Verbindungselementen verschraubt wird. Die Platte ist im betrachteten Beispiel rechteckig, könnte aber auch eine andere Form haben.

Wie sich bereits aus der vorangehenden Beschreibung ergibt, sind nicht nur am Rand eines jeweiligen Photovoltaikmodul-Feldes, sondern auch zwischen benachbarten Photovoltaikmodul-Reihen R1, R2, R3 Verbindungselemente 7, 7' vorgesehen, durch welche jeweils mindestens zwei Photovoltaikmodule 3 miteinander verbunden sind.

Die zwischen benachbarten Photovoltaikmodul-Reihen R1, R2, R3 vorgesehenen Verbindungselemente 7, 7' können sowohl mit den Photovoltaikmodulen 3 der einen Photovoltaikmodul-Reihe als auch mit den Photovoltaikmodulen der benachbarten anderen Photovoltaikmodul-Reihe verbunden sein. In diesem Fall müsste zwischen zwei benachbarten Photovoltaikmodul-Reihen nur eine einzige Verbindungselement-Reihe vorgesehen werden, und die Verbindungselemente dieser einzigen Verbindungselement-Reihe würden sowohl die Photovoltaikmodule der einen Photovoltaikmodul-Reihe, als auch die Photovoltaikmodule der benachbarten anderen Photovoltaikmodul-Reihe miteinander verbinden. Auch die zwischen benachbarten Photovoltaikmodul-Reihen vorgesehenen Verbindungselemente werden vorzugsweise durch Kopplungselemente 8 gemäß Figur 6 oder dergleichen miteinander verbunden.

Alternativ könnte vorgesehen werden, dass die zwischen benachbarten Photovoltaikmodul-Reihen R1, R2, R3 vorgesehenen Verbindungselemente 7, 7' erste Verbindungselemente umfassen, die nur mit Photovoltaikmodulen der einen Photovoltaikmodul-Reihe verbunden sind, und zweite Verbindungselemente umfassen, die nur mit Photovoltaikmodulen der benachbarten anderen Photovoltaikmodul-Reihe verbunden sind. In diesem Fall wären zwischen benachbarten Photovoltaikmodul-Reihen R1, R2, R3 zwei parallel zueinander verlaufende Verbindungselement-Reihen vorhanden, nämlich eine die ersten Verbindungselemente umfassende und an die eine Photovoltaikmodul-Reihe angrenzende erste Verbindungselement-Reihe und eine daneben angeordnete, die zweiten Verbindungselemente umfassende und an die andere Photovoltaikmodul-Reihe angrenzende zweite Verbindungselement-Reihe.

Benachbarte erste und zweite Verbindungselemente können aneinander befestigt werden. Dies kann beispielsweise, aber verständlicherweise nicht ausschließlich dadurch erfolgen, dass die ersten Verbindungselemente mit den zweiten Verbindungselementen verschraubt werden. In diesem Fall könnte eventuell darauf verzichtet werden, die Verbindungselemente der einzelnen Verbindungselement-Reihen durch Kopplungselemente 8 oder dergleichen miteinander zu verbinden.

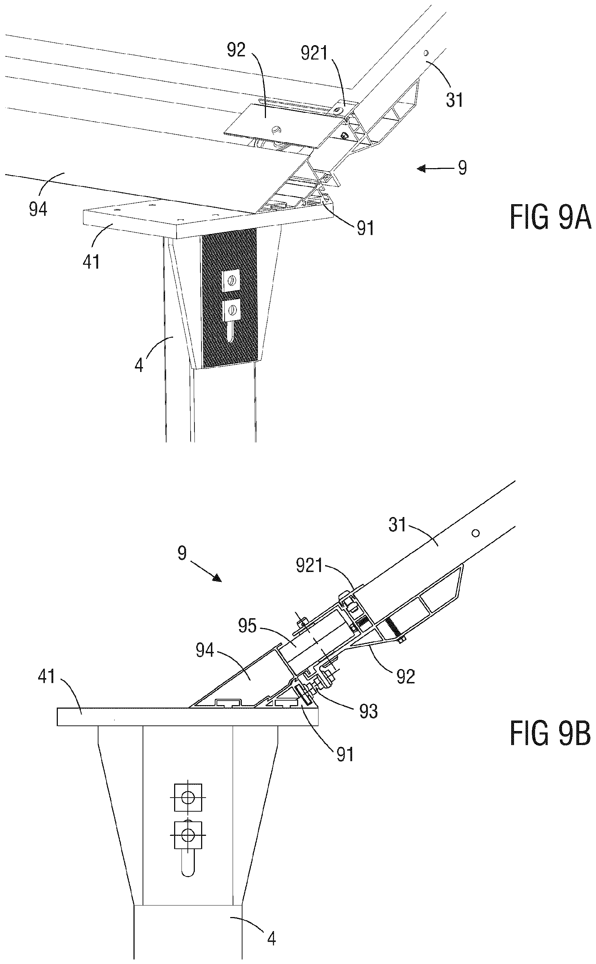

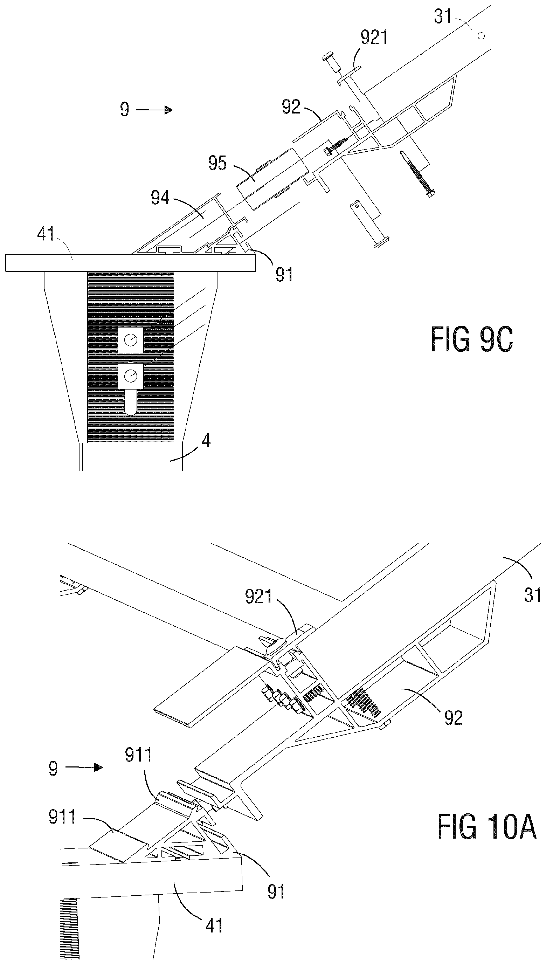

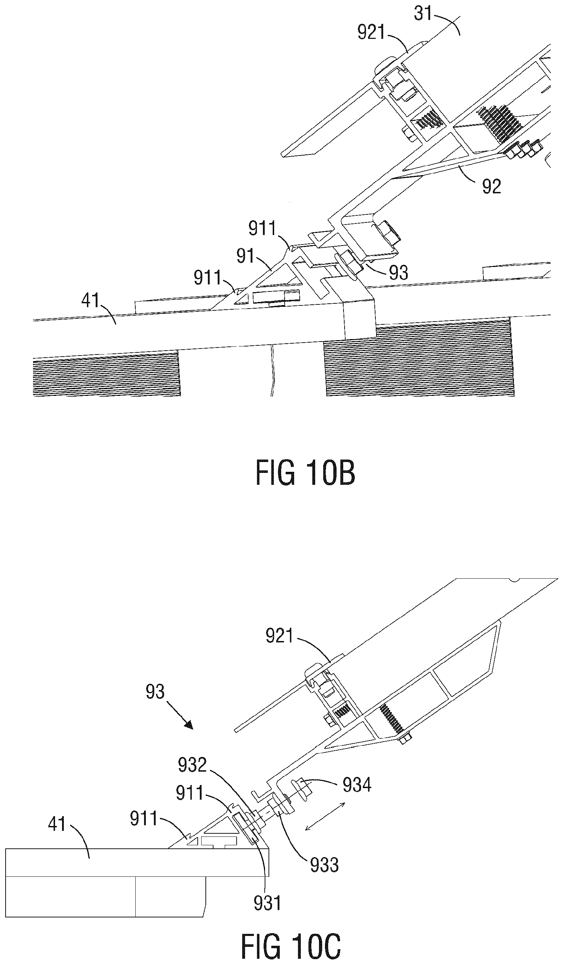

Wie eingangs bereits erwähnt wurde, sind die Photovoltaikmodul-Felder 2 auf eine mit dem Untergrund 5 verbundene Basis 4 aufgesetzt, wobei die Basis im betrachteten Beispiel durch Pfähle 4 bzw. Pfahlreihen R4, R5, R6 gebildet werden. Die Photovoltaikmodul-Felder 2 sind über einen Kopplungsmechanismus 9 auf die Pfähle 4 aufgesetzt. Dieser Kopplungsmechanismus 9 ist bei Bedarf umkonfigurierbar und/oder verstellbar und wird nachfolgend unter Bezugnahme auf die Figuren 9 und 10 näher beschrieben.

Wie aus den Figuren 10A bis 10C ersichtlich ist, umfasst der Kopplungsmechanismus 9 eine am oberen Ende eines Pfahls 4 angebrachtes Stützvorrichtung 91, einen an einem Photovoltaikmodul 3 angebrachten Photovoltaikmodul-Träger 92 und einen dazwischen vorgesehenen Verstellmechanismus 93, durch welchen der Abstand zwischen der Stützvorrichtung 91 und dem Photovoltaikmodul-Träger 92 veränderbar ist.

Die Stützvorrichtung 91 ist genau genommen nicht direkt auf dem Pfahl 4 montiert, sondern auf einer Kopfplatte 41, die am oberen Ende eines jeden Pfahls 4 an diesem angebracht ist. Vorzugsweise ist die Kopfplatte 41 in Bezug zum Pfahl 4 vertikal verschiebbar angebracht, so dass die vertikale Position der Kopfplatte wunschgemäß einstellbar ist. Die Stützvorrichtung 91 wird durch eine Profilschiene gebildet die sich über alle Pfähle 4 einer Pfahlreihe R4, R5, R6 hinweg erstreckt und vorzugsweise mit jedem Pfahl 4 verbunden ist. Die Stützvorrichtung kann dabei jedoch aus mehreren kürzeren Einzelteilen zusammengesetzt sein.

Der Photovoltaikmodul-Träger 92 ist jeweils am äußersten Photovoltaikmodul 3 einer jeden Photovoltaikmodul-Reihe R1, R2, R3, genauer gesagt am Rahmen 31 desselben angeschraubt und enthält zusätzlich eine Klemmvorrichtung 921, mittels welcher das Photovoltaikmodul am Photovoltaikmodul-Träger festklemmbar ist. Pro äußerstem Photovoltaikmodul sind im betrachteten Beispiel zwei Photovoltaikmodul-Träger vorgesehen, welche vorliegend in den Eckbereichen der betreffenden Photovoltaikmodule vorgesehen sind. Es können aber auch mehr als zwei Photovoltaikmodul-Träger pro Photovoltaikmodul vorgesehen sein, und die Photovoltaikmodul-Träger müssen auch nicht in den Ecken der Photovoltaikmodule vorgesehen sein.

Durch den Verstellmechanismus 93 ist der Abstand zwischen der Stützvorrichtung 91 und dem Photovoltaikmodul-Träger 92 veränderbar. Eine mögliche praktische Realisierung des Verstellmechanismus ist insbesondere in der Figur 10C anschaulich dargestellt. Es sei bereits an dieser Stelle darauf hingewiesen, dass auch beliebige andere Verstellmechanismen mit entsprechender Funktion zum Einsatz kommen können.

Der vorliegend zum Einsatz kommende Verstellmechanismus 93 umfasst eine Schraube 931, eine erste Mutter 932, eine zweite Mutter 933, und eine dritte Mutter 934.

Die Schraube 931 ist vorzugsweise verdrehsicher an der Stützvorrichtung 91 angebracht und wird durch die erste Mutter 932 in ihrer bestimmungsgemäßen Position an der Stützvorrichtung fixiert. Da die Stützvorrichtung im betrachteten Beispiel wie bereits erwähnt durch eine beispielsweise im Strangpressverfahren hergestellte Profilschiene gebildet wird, kann die Schraube 931 an einer beliebigen Stelle entlang der Stützvorrichtung fixiert werden. Bei der Montage wird ein Teil der Stützvorrichtung 91 zwischen dem Schraubenkopf und der ersten Mutter festgeklemmt. Durch die zweite Mutter 933 und die dritte Mutter 944 wird der Photovoltaikmodul-Träger 92 am Schaft der Schraube 931 fixiert. Dabei wird ein Teil des Photovoltaikmodul-Trägers 92 zwischen der zweiten Mutter und der dritten Mutter festgeklemmt. Vom Abstand zwischen der ersten Mutter 932 und der zweiten Mutter 933 hängt es ab, wie groß der Abstand zwischen der Stützvorrichtung 91 und dem Photovoltaikmodul-Träger 92 ist. Bei Bedarf kann durch eine Änderung des Abstandes zwischen der ersten Mutter 932 und der zweiten Mutter 933 der Abstand zwischen der Stützvorrichtung 91 und dem Photovoltaikmodul-Träger 92 wunschgemäß eingestellt bzw. verändert werden.

Wie in den Figuren 9A bis 9C veranschaulicht ist, kann neben der Stützvorrichtung 91 ein Schiene 94 vorgesehen werden, und am Photovoltaikmodul-Träger 92 ein Rad 95 angebracht werden, welches bei geeigneter Einstellung des Verstellmechanismus 93 auf der Schiene 94 aufliegt und eine Bewegung der Photovoltaikmodule, genauer gesagt eines jeweiligen Photovoltaikmodul-Feldes 2 entlang der Schiene ermöglicht. Die Photovoltaikmodul-Felder 2 sind dabei unabhängig voneinander bewegbar.

Die Schiene 94 wird im betrachteten Beispiel in hakenförmige Vorsprünge 911 der Stützvorrichtung 91 eingehängt und dann mit der Kopfplatte 41 verschraubt. Durch das Einhängen der Schiene 94 an der Stützvorrichtung 91 weist die Schiene 94 automatisch die bestimmungsgemäße Relativlage in Bezug zur Stützvorrichtung auf, wodurch die Schiene 94 und das Rad 95 automatisch bestimmungsgemäß miteinander in Eingriff kommen. Die Schiene 94 wird im betrachteten Beispiel wie die Stützvorrichtung 91 durch eine beispielsweise im Strangpressverfahren hergestellte Profilschiene gebildet die sich über alle Pfähle 4 einer Pfahlreihe R4, R5, R6 hinweg erstreckt und vorzugsweise mit jedem Pfahl 4 verbunden ist. Die Schiene kann dabei jedoch aus mehreren kürzeren Einzelteilen zusammengesetzt sein.

Die Schiene 94 und das Rad 95 sind optionale Anlagenkomponenten, die nicht vorgesehen werden müssen. Die Photovoltaikmodul-Felder 2 werden auch ohne Schienen und Räder ordnungsgemäß von den Pfählen 4 getragen, sind ohne Schiene und Rad jedoch nicht in Bezug zu den Pfählen bewegbar.

Der Verstellmechanismus 93 ist so ausgebildet, dass durch diesen ein Aufsetzen des Rades 95 auf die Schiene 94 und ein Abheben des Rades von der Schiene bewerkstelligbar ist.

Die Abhebbarkeit des Rades von der Schiene erweist sich in mehrfacher Hinsicht als vorteilhaft. Einerseits kann dadurch in Zeiten, in welchen kein Verschieben der Photovoltaikmodule erfolgt, eine Entlastung der vergleichsweise empfindlichen Räder erfolgen. Und andererseits kann in diesem Zustand eine Demontage und Montage der Schienen und der Räder durchführbar, was sich beispielsweise bei nötigen Arbeiten an den Schienen und/oder Rädern als vorteilhaft erweist und es zudem ermöglicht, dass die Schienen und Räder nur bei Bedarf montiert und danach gleich wieder demontiert werden.

Die vorstehend beschriebene Photovoltaik-Anlage erweist sich in mehrfacher Hinsicht als vorteilhaft. Sie ermöglicht eine sehr effiziente Nutzung des Sonnenlichts zur Stromerzeugung und gleichzeitig eine effiziente Nutzung des von der Photovoltaik-Anlage bedeckten Bodens. Teile der Photovoltaik-Anlage können bei Bedarf mit vertretbarem Aufwand verschoben werden, wobei die hierzu erforderlichen Schienen und Räder optionale Anlagenkomponenten sind, die auch während des Betriebes der der Photovoltaik-Anlage schnell und einfach montiert und demontiert werden können.

### Bezugszeichenliste

- 1: Photovoltaik-Anlage
- 2: Photovoltaikmodul-Feld
- 3: Photovoltaikmodul
- 4: Pfahl
- 5: Untergrund
- 6: Klemmvorrichtung
- 7: Verbindungselement
- 7': Verbindungselement
- 8: Kopplungselement
- 9: Kopplungsmechanismus

- 41: Kopfplatte

- 61: Klemmkeil
- 62: Klemmplatte
- 63: Schraube

- 91: Stützvorrichtung
- 92: Photovoltaikmodul-Träger
- 93: Verstellmechanismus
- 94: Schiene
- 95: Rad

- 611: Bodenplatte von 61
- 612: V-förmige Erhebung von 61

- 911: hakenförmiger Vorsprung

- 921: Klemmvorrichtung
- 922: Rad

- 931: Schraube
- 932: erste Mutter
- 932: zweite Mutter
- 933: dritte Mutter
- R1, R2, R3: Photovoltaikmodul-Reihen
- R4, R5, R6: Pfahl-Reihen

## Patentansprüche

1. Photovoltaik-Anlage zum Erzeugen von Solarstrom, mit einer Vielzahl von Photovoltaikmodulen (3),
- wobei die Photovoltaikmodule zu mindestens einer Photovoltaikmodul-Reihe (R1, R2, R3) zusammengesetzt sind, wobei jede Photovoltaikmodul-Reihe mindestens drei in Reihe angeordnete Photovoltaikmodule umfasst,
- wobei die Photovoltaikmodule jeder Photovoltaikmodul-Reihe so miteinander verbunden sind, dass der Winkel zwischen benachbarten Photovoltaikmodulen zumindest teilweise kleiner als 180° ist und die Photovoltaikmodul-Reihe somit einen bogenförmigen Querschnitt aufweist,
**dadurch gekennzeichnet,**
- **dass** die Photovoltaikmodule durch mehrere Verbindungselemente (7, 7') miteinander verbunden sind, die jeweils mindestens zwei Photovoltaikmodule miteinander verbinden und zusätzlich mit mindestens einem der anderen Verbindungselemente verbunden sind, und
- **dass** über die Verbindungselemente (7, 7') zumindest Photovoltaikmodule (3) der selben Photovoltaikmodul-Reihe (R1, R2, R3) miteinander verbunden sind.

2. Photovoltaik-Anlage nach Anspruch 1, wobei die Verbindungselemente (7, 7') durch Platten gebildet werden, die entlang wenigstens einer Längsseite wenigstens einer Photovoltaikmodul-Reihe (R1, R2, R3) verlaufend angeordnet sind und seitlich an den die betreffende Längsseite der Photovoltaikmodul-Reihe bildenden Seiten der Photovoltaikmodule (3) angebracht sind.

3. Photovoltaik-Anlage nach Anspruch 2, wobei die im bestimmungsgemäß montierten Zustand der Verbindungselemente (7, 7') oben zu liegen kommende Seite derselben bündig mit den Oberseiten der durch sie verbundenen Photovoltaikmodule (3) abschließt.

4. Photovoltaik-Anlage nach Anspruch 2 oder 3, wobei die im bestimmungsgemäß montierten Zustand der Verbindungselemente (7, 7') unten zu liegen kommende Seite derselben die durch sie verbundenen Photovoltaikmodule (3) nach unten überragt.

5. Photovoltaik-Anlage nach einem der Ansprüche 2 bis 4,
- wobei die Verbindungselemente (7, 7'), unter Verwendung welcher die Photovoltaikmodule (3) einer Photovoltaikmodul-Reihe (R1, R2, R3) miteinander verbunden sind, teilweise Verbindungselemente eines ersten Typs (7), und teilweise Verbindungselemente eines zweiten Typs (7') sind,
- wobei sich die verschiedenen Verbindungselement-Typen (7, 7') dadurch unterscheiden, dass sie unterschiedlich groß sind, wobei durch den größeren Verbindungselement-Typ mehr Photovoltaikmodule (3) miteinander verbindbar sind als mit dem kleineren Verbindungselement-Typ, und
- wobei die in Längsrichtung einer Photovoltaikmodul-Reihe (R1, R2, R3) aneinandergereihten Verbindungselemente (7, 7') eine Verbindungselement-Reihe bilden und wobei die Verbindungselemente einer ersten Verbindungselement-Reihe und die Verbindungselemente der nächsten davor oder dahinter liegenden zweiten Verbindungselement-Reihe so unterschiedlich ausgewählt und angeordnet sind, dass die Grenzen oder Zwischenräume zwischen benachbarten Verbindungselementen der ersten Verbindungselement-Reihe nicht deckungsgleich mit den Grenzen oder Zwischenräumen zwischen benachbarten Verbindungselementen der zweiten Verbindungselement-Reihe sind.

6. Photovoltaik-Anlage nach einem der Ansprüche 2 bis 5, wobei von den Verbindungselementen (7, 7'), unter Verwendung welcher die Photovoltaikmodule (3) einer Photovoltaikmodul-Reihe (R1, R2, R3) miteinander verbunden sind, benachbarte Verbindungselemente über ein mit beiden Verbindungselementen verbundenes Kopplungselement (8) verbunden sind.

7. Photovoltaik-Anlage nach einem der Ansprüche 2 bis 6, wobei die Kopplungselement (8) durch eine mit beiden Verbindungselementen (7, 7') verschraubte Platte gebildet wird.

8. Photovoltaik-Anlage nach einem der vorhergehenden Ansprüche, wobei auch zwischen benachbarten Photovoltaikmodul-Reihen (R1, R2, R3) Verbindungselemente (7, 7') vorgesehen sind, durch welche jeweils mindestens zwei Photovoltaikmodule (3) miteinander verbunden sind, und wobei die zwischen benachbarten Photovoltaikmodul-Reihen (R1, R2, R3) vorgesehenen Verbindungselemente (7, 7') sowohl mit den Photovoltaikmodulen (3) der einen Photovoltaikmodul-Reihe als auch mit den Photovoltaikmodulen der benachbarten anderen Photovoltaikmodul-Reihe verbunden sind.

9. Photovoltaik-Anlage nach einem der Ansprüche 1 bis 7, wobei auch zwischen benachbarten Photovoltaikmodul-Reihen (R1, R2, R3) Verbindungselemente (7, 7') vorgesehen sind, durch welche jeweils mindestens zwei Photovoltaikmodule (3) miteinander verbunden sind, und wobei die zwischen benachbarten Photovoltaikmodul-Reihen (R1, R2, R3) vorgesehenen Verbindungselemente (7, 7') erste Verbindungselemente umfassen, die nur mit Photovoltaikmodulen der einen Photovoltaikmodul-Reihe verbunden sind, und zweite Verbindungselemente umfassen, die nur mit Photovoltaikmodulen der benachbarten anderen Photovoltaikmodul-Reihe verbunden sind, und wobei benachbarte erste und zweite Verbindungselemente (7, 7') aneinander befestigt sind.

10. Photovoltaik-Anlage nach einem der vorhergehenden Ansprüche, wobei die Photovoltaikmodule (3) einen diese seitlich umlaufenden Rahmen (31) aufweisen, und wobei die Verbindungselemente (7, 7') mit den Photovoltaikmodul-Rahmen verbunden sind.

## Claims

1. Photovoltaic system for generating solar power, having a large number of photovoltaic modules (3),
- wherein the photovoltaic modules are combined to form at least one photovoltaic module row (R1, R2, R3), wherein each photovoltaic module row comprises at least three photovoltaic modules arranged in series,
- wherein the photovoltaic modules of each photovoltaic module row are connected to each other such that the angle between adjacent photovoltaic modules is at least partially less than 180° and the photovoltaic module row therefore has an arcuate cross section,
**characterized**
- **in that** the photovoltaic modules are connected to each other by a plurality of connecting elements (7, 7'), which each connect at least two photovoltaic modules to each other and are additionally connected to at least one of the other connecting elements, and
- **in that** at least photovoltaic modules (3) of the same photovoltaic module row (R1, R2, R3) are connected to each other by way of the connecting elements (7, 7').

2. Photovoltaic system according to Claim 1, wherein the connecting elements (7, 7') are formed by plates which are arranged running along at least one longitudinal side of at least one photovoltaic module row (R1, R2, R3) and are attached laterally to those sides of the photovoltaic modules (3) which form the relevant longitudinal side of the photovoltaic module row.

3. Photovoltaic system according to Claim 2, wherein the side of the connecting elements (7, 7') which comes to lie at the top in the intended mounted state thereof terminates flush with the top sides of the photovoltaic modules (3) connected by said connecting elements.

4. Photovoltaic system according to Claim 2 or 3, wherein the side of the connecting elements (7, 7') which comes to lie at the bottom in the intended mounted state thereof projects downwards beyond the photovoltaic modules (3) connected by said connecting elements.

5. Photovoltaic system according to one of Claims 2 to 4,
- wherein the connecting elements (7, 7'), using which the photovoltaic modules (3) of a photovoltaic module row (R1, R2, R3) are connected to each other, are in part connecting elements of a first type (7), and in part connecting elements of a second type (7'),
- wherein the different connecting element types (7, 7') differ in that they are of different size, wherein more photovoltaic modules (3) can be connected to each other by the larger connecting element type than by the smaller connecting element type, and
- wherein the connecting elements (7, 7') arranged in series in a longitudinal direction of a photovoltaic module row (R1, R2, R3) form a connecting element row and wherein the connecting elements of a first connecting element row and the connecting elements of the next, second connecting element row lying in front of or behind said first connecting element row are selected, and arranged, differently such that the borders or intermediate spaces between adjacent connecting elements of the first connecting element row are not congruent with the borders or intermediate spaces between adjacent connecting elements of the second connecting element row.

6. Photovoltaic system according to one of Claims 2 to 5, wherein of the connecting elements (7, 7'), using which the photovoltaic modules (3) of a photovoltaic module row (R1, R2, R3) are connected to each other, adjacent connecting elements are connected by way of a coupling element (8) connected to both connecting elements.

7. Photovoltaic system according to one of Claims 2 to 6, wherein the coupling element (8) is formed by a plate screwed to both connecting elements (7, 7').

8. Photovoltaic system according to one of the preceding claims, wherein connecting elements (7, 7') are also provided between adjacent photovoltaic module rows (R1, R2, R3) and each connect at least two photovoltaic modules (3) to each other, and wherein the connecting elements (7, 7') provided between adjacent photovoltaic module rows (R1, R2, R3) are connected both to the photovoltaic modules (3) of the one photovoltaic module row and to the photovoltaic modules of the adjacent other photovoltaic module row.

9. Photovoltaic system according to one of Claims 1 to 7, wherein connecting elements (7, 7') are also provided between adjacent photovoltaic module rows (R1, R2, R3) and each connect at least two photovoltaic modules (3) to each other, and wherein the connecting elements (7, 7') provided between adjacent photovoltaic module rows (R1, R2, R3) comprise first connecting elements, which are connected only to photovoltaic modules of the one photovoltaic module row, and second connecting elements, which are connected only to photovoltaic modules of the adjacent other photovoltaic module row, and wherein adjacent first and second connecting elements (7, 7') are fastened to one another.

10. Photovoltaic system according to one of the preceding claims, wherein the photovoltaic modules (3) have a frame (31) laterally encircling them, and wherein the connecting elements (7, 7') are connected to the photovoltaic module frame.

## Revendications

1. Installation photovoltaïque destinée à générer de l'énergie solaire, ladite installation photovoltaïque comprenant un grand nombre de modules photovoltaïques (3),
- les modules photovoltaïques étant assemblés en au moins une rangée de modules photovoltaïques (R1, R2, R3), chaque rangée de modules photovoltaïques comprenant au moins trois modules photovoltaïques disposés en rangée,
- les modules photovoltaïques de chaque rangée de modules photovoltaïques étant reliés les uns aux autres de telle sorte que l'angle formé entre des modules photovoltaïques adjacents soit au moins en partie inférieur à 180° et la rangée de modules photovoltaïques ayant ainsi une section transversale en forme d'arc,
**caractérisée en ce que**
- les modules photovoltaïques sont reliés entre eux par plusieurs éléments de liaison (7, 7') qui relient chacun au moins deux modules photovoltaïques entre eux et qui sont en outre reliés à au moins un des autres éléments de liaison, et
- au moins des modules photovoltaïques (3) de la même rangée de modules photovoltaïques (R1, R2, R3) sont reliés entre eux par le biais des éléments de liaison (7, 7').

2. Installation photovoltaïque selon la revendication 1, les éléments de liaison (7, 7') étant formés par des plaques qui sont disposées de manière à s'étendre le long d'au moins un grand côté d'au moins une rangée de modules photovoltaïques (R1, R2, R3) et qui sont fixées latéralement aux côtés des modules photovoltaïques (3) qui forment ledit grand côté de la rangée de modules photovoltaïques.

3. Installation photovoltaïque selon la revendication 2, le côté des éléments de liaison (7, 7'), qui est situé en haut lorsque ceux-ci sont montés comme prévu affleurant les côtés supérieurs des modules photovoltaïques (3) reliés par ceux-ci .

4. Installation photovoltaïque selon la revendication 2 ou 3, le côté des éléments de liaison (7, 7') qui est situé en bas lorsque ceux-ci sont montés comme prévu faisant saillie vers le bas des modules photovoltaïques (3) reliés par ceux-ci .

5. Installation photovoltaïque selon l'une des revendications 2 à 4,
- les éléments de liaison (7, 7'), à l'aide desquels les modules photovoltaïques (3) d'une rangée de modules photovoltaïques (R1, R2, R3) sont reliés entre eux, étant en partie des éléments de liaison d'un premier type (7) et en partie des éléments de liaison d'un deuxième type (7'),
- les différents types d'élément de liaison (7, 7') différant en ce qu'ils sont de tailles différentes, davantage de modules photovoltaïques (3) pouvant être reliés entre eux par le type d'élément de liaison le plus grand qu'avec le type d'élément de liaison le plus petit, et
- les éléments de liaison (7, 7') disposés en rangée dans la direction longitudinale d'une rangée de modules photovoltaïques (R1, R2, R3) formant une rangée d'éléments de liaison et les éléments de liaison d'une première rangée d'éléments de liaison et les éléments de liaison de la rangée d'éléments de liaison suivante située devant ou derrière étant sélectionnés et disposés de manière différente de sorte que les limites ou les espaces intermédiaires entre des éléments de liaison adjacents de la première rangée d'éléments de liaison ne coïncident pas avec les limites ou aux espaces intermédiaires entre les éléments de liaison adjacents de la deuxième rangée d'éléments de liaison.

6. Installation photovoltaïque selon l'une des revendications 2 à 5, parmi les éléments de liaison (7, 7') à l'aide desquels les modules photovoltaïques (3) d'une rangée de modules photovoltaïques (R1, R2, R3) sont reliés entre eux, des éléments de liaison adjacents étant reliés par le biais d'un élément d'accouplement (8) relié aux deux éléments de liaison.

7. Installation photovoltaïque selon l'une des revendications 2 à 6, l'élément d'accouplement (8) étant formé par une plaque vissée aux deux éléments de liaison (7, 7').

8. Installation photovoltaïque selon l'une des revendications précédentes, des éléments de liaison (7, 7'), qui relient chacun au moins deux modules photovoltaïques (3) entre eux, étant également prévus entre des rangées de modules photovoltaïques adjacentes (R1, R2, R3) et les éléments de liaison (7, 7') prévus entre des rangées de modules photovoltaïques adjacentes (R1, R2, R3) étant reliés aussi bien aux modules photovoltaïques (3) d'une rangée de modules photovoltaïques qu'aux modules photovoltaïques de l'autre rangée de modules photovoltaïques adjacente.

9. Installation photovoltaïque selon l'une des revendications 1 à 7, des éléments de liaison (7, 7'), qui relient chacun au moins deux modules photovoltaïques (3) entre eux, étant également prévus entre des rangées de modules photovoltaïques adjacentes (R1, R2, R3), et les éléments de liaison (7, 7') qui sont prévus entre des rangées de modules photovoltaïques adjacentes (R1, R2, R3) comprenant des premiers éléments de liaison qui sont reliés uniquement aux modules photovoltaïques d'une rangée de modules photovoltaïques et des deuxièmes éléments de liaison qui sont reliés uniquement à des modules photovoltaïques de l'autre rangée de modules photovoltaïques adjacente, et des premier et deuxième éléments de liaison adjacents (7, 7') étant fixés l'un à l'autre.

10. Installation photovoltaïque selon l'une des revendications précédentes, les modules photovoltaïques (3) comportant un cadre (31) qui s'étend latéralement autour de ceux-ci, et les éléments de liaison (7, 7') étant reliés au cadre de modules photovoltaïques.
